# Europäisches Patentamt
## European Patent Office
## Office européen des brevets

(19)

(11) Veröffentlichungsnummer: **0 272 544 B1**

(12)

# EUROPÄISCHE PATENTSCHRIFT

(45) Veröffentlichungstag der Patentschrift:
26.09.90

(51) Int. Cl.⁵: **G01D 5/26**

(21) Anmeldenummer: 87118240.8

(22) Anmeldetag: 09.12.87

(54) Winkellagegeber mit fotoelektrisch abtastbarer Geberscheibe und zweifach gelagerter Geberwelle.

(30) Priorität: 22.12.86 DE 3644043

(43) Veröffentlichungstag der Anmeldung:
29.06.88 Patentblatt 88/26

(45) Bekanntmachung des Hinweises auf die Patenterteilung:
26.09.90 Patentblatt 90/39

(84) Benannte Vertragsstaaten:
CH DE ES FR GB IT LI SE

(56) Entgegenhaltungen:
EP-A- 0 085 787
DE-A- 2 358 750
DE-C- 3 408 478
FR-A- 2 266 889

(73) Patentinhaber: Siemens Aktiengesellschaft,
Wittelsbacherplatz 2, D-8000 München 2(DE)

(72) Erfinder: Burger, Wilhelm, Krähenweg 47,
D-8510 Fürth(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Winkellagegeber zur Erfassung der Winkellage eines drehbeweglichen Maschinenelements, gemäß dem Oberbegriff des Hauptanspruchs.

Beispielsweise bei Werkzeugmaschinen, Handhabungsautomaten (Robotern) oder in der Fahrzeugtechnik werden derartige Geber eingesetzt, um die Winkellage einer drehbaren Achse bezüglich einer Referenzlage zu erfassen. Ein Hauptbestandteil eines gattungsgemäßen Winkellagegebers ist eine fotoelektrisch abtastbare Spuren tragende Geberscheibe, auf die die Drehbewegung des zu überwachenden Maschinenelements mittels einer mechanisch gekoppelten Geberwelle übertragbar ist. Da bei dem hohen Auflösungsvermögen und der hohen Spurenzahl heutiger Geberscheiben ein mechanisches Spiel der sie antreibenden Geberwelle unbedingt zu vermeiden ist, um das hohe Auflösungsvermögen auch zuverlässig ausnützen zu können, werden die Geberwellen moderner Winkellagegeber in der Regel mit mindestens zwei Wälzlagern, z.B. spielfrei gegeneinander verspannten Kugellagern, gelagert, auch wenn derartige Konstruktionen platzraubend sind.

Neben diesem räumlich-mechanischen Problem weisen Winkellagegeber noch den systemimmanenten meßtechnischen Nachteil auf, daß sie Winkellagen nur innerhalb des Bereichs einer Umdrehung (360°) absolut angeben können.

Die Aufgabe der Erfindung besteht daher in der Bereitstellung eines gattungsgemäßen Winkellagegebers, dessen Erfassungsbereich über eine volle Umdrehung hinausgeht und der trotzdem baulich möglichst kompakt ist.

Diese Aufgabe wird erfindungsgemäß durch die kennzeichnenden Merkmale des Hauptanspruchs gelöst. Vorteilhafte Ausgestaltungen und Weiterbildungen der Erfindung sind Gegenstand der Unteransprüche.

Der Hauptvorteil der Erfindung besteht darin, daß der Meßbereich des Winkellagegebers auf ein Vielfaches einer vollen Umdrehung erhöht wird, ohne die Abmessungen des Gebers wesentlich auszudehnen. Die Geberwelle braucht nicht verlängert zu werden; auch der Durchmesser des Gebergehäuses braucht sich nicht zu ändern. Anstelle eines Anbaus eines Umdrehungszählers an eine vorhandene Konstruktion eines Winkellagegebers bietet die Erfindung eine integrierte Lösung der gestellten Aufgabe.

Der Einsatz eines Wiegand-Sensors oder eines Impulsdrahts als Magnetfeldsensor, gemäß Anspruch 2, bietet den Vorteil, daß ein solcher Sensor unabhängig von einer Versorgungsspannung arbeiten kann und außerdem Spannungsimpulse liefert, deren Amplitude im Gegensatz zu jener eines Induktivgebers unabhängig von der Relativgeschwindigkeit zwischen feststehendem und bewegten Teil des Meßsystems ist. Auf diese Weise kann sich die Zählung voller Umdrehungen auch dann fortsetzen, wenn der Winkellagegeber von seiner Spannungsversorgung abgeschnitten ist, solange wenigstens die zugehörige Auswerteeinrichtung mit Energie versorgt bleibt. Die genannten Sensoren zeichnen sich durch einen geringen Raumbedarf und eine große Störsicherheit aus. Hinsichtlich der Physik von "Impulsdrähten als magnetischen Gebern für Bewegungs- und Feldsensoren" wird z.B. auf den Siemens Forschungs- und Entwicklungsbericht Band 15 (1986) Nr.3, Seite 135-144, verwiesen.

Eine Anordnung des ortsfesten Magnetfeldsensors in einer axialen Nut oder Bohrung des die Wälzlager umschließenden Lagergehäuses, gemäß Anspruch 3, dient der Vermeidung magnetischer Kurzschlüsse. Die Verwendung einer magnetfelddurchlässigen Spannhülse zum spielfreien Verspannen der Wälzlager, gemäß Anspruch 4, ergibt eine zuverlässige Wirkung des mit der Geberwelle umlaufenden Magneten auf den ortsfesten Magnetfeldsensor. Um letzteren zyklisch in einen definierten Vormagnetisierungszustand zu versetzen, kann gemäß Anspruch 5 vorteilhaft zusätzlich ein mit der Geberwelle umlaufender Setzmagnet vorgesehen werden.

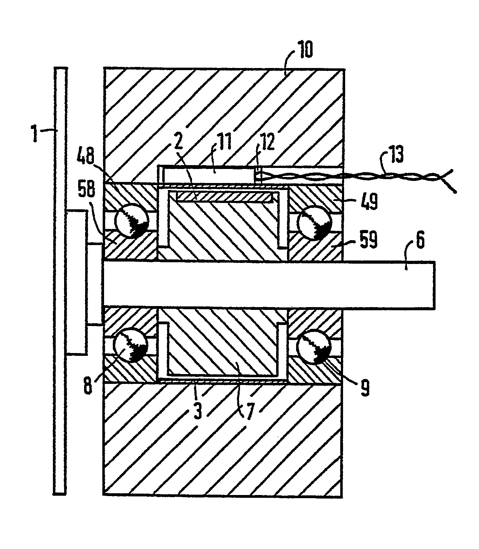

Anhand eines in der Zeichnung dargestellten Ausführungsbeispiels wird die Erfindung nachstehend näher erläutert. Die Figur zeigt ein Schnittbild durch einen erfindungsgemäßen Winkellagegeber mit Geberscheibe und zweifach gelagerter Geberwelle.

Die fotoelektrisch abtastbare Geberscheibe 1 wird von einer Geberwelle 6 angetrieben, die ihrerseits mit einem nicht näher dargestellten drehbeweglichen Maschinenelement mechanisch gekoppelt ist. Zur spielfreien Lagerung der Geberwelle 6 sind zwei Kugellager 8,9 mit ortsfesten, im Lagergehäuse 10 eingepaßten Lageraußenringen 48 bzw.49 und mit der Geberwelle 6 umlaufenden Lagerinnenringen 58 bzw.59 vorgesehen. Zur Erzielung der Spielfreiheit sind die Kugellager 8,9 gegeneinander verspannt, wobei sie mit Hilfe der Spannhülse 3 auf Distanz gehalten werden.

Der schmale Raum zwischen der Spannhülse 3 und der Geberwelle 6 - bis dato als Totraum hingenommen - wird nun für die Unterbringung eines mit der Geberwelle 6 umlaufenden Magneten 2 genutzt. Dabei sitzt der Magnet 2 vorteilhafterweise nicht unmittelbar auf der Geberwelle 6, sondern in einer Magnetaufnahme 7, damit der Magnet 2 mit möglichst geringem Abstand von der Innenwand der Spannhülse 3 umläuft. Der Magnet 2 wirkt nämlich bei jeder Umdrehung auf einen in einer axialen Nut 12 oder Bohrung des Lagergehäuses 10 angeordneten Magnetfeldsensor 11. Diese Wirkung ist umso stärker, je näher der Magnet 2 an dem Magnetfeldsensor 11 vorbeistreicht. Aus diesem Grund wird auch die Wandstärke der Spannhülse 3 vorzugsweise auf ein mechanisch vertretbares geringes Maß dimensioniert, wobei zu bemerken ist, daß das umschließende Lagergehäuse 10 die Erzielung einer ausreichenden mechanischen Festigkeit ohnehin unterstützt. Das Material der Spannhülse 3 ist außerdem vorzugsweise besonders durchlässig gegenüber magnetische Feldern, um beim Vorbeistreichen des Magneten 2 am Magnetfeldsensor 11 einen scharfen Impuls zu erhalten. Ein geeignetes Material ist z.B. Messing.

Ein solcher, bei jeder Umdrehung der Geberwelle 6 bzw. der Geberscheibe 1 auftretender Impuls wird über die Sensorleitung 13 an einen nicht dargestellten Umdrehungszähler geliefert und mit durch die Bewegungsrichtung festgelegtem Vorzeichen aufsummiert. Der Zählstand läßt dann eine über den Bereich einer vollen Umdrehung der Geberscheibe 1 hinausgehende Absolutlageerfassung zu.

Als ortsfester Magnetfeldsensor 11 kann bei der Abtastung von Drehbewegungen niedriger Drehzahl ein Reed-Kontakt verwendet werden.

Mit besonderem Vorteil wird als ortsfester Magnetfeldsensor 11 ein Wiegand-Sensor oder Impulsdraht eingesetzt. Dessen geringe Abmessungen gestatten die Beibehaltung einer äußerst kompakten Bauweise. Über eine große Unempfindlichkeit gegenüber elektromagnetisch aggressiven Umweltsituationen hinaus zeichnen sich derartige Sensoren noch dadurch aus, daß sie nicht auf eine eigene Versorgungsspannung angewiesen sind, so daß trotz eines etwaigen Ausfalls der Spannungsversorgung des Winkellagegebers die vollen Umdrehungen weitergezählt werden können, solange wenigstens der Umdrehungszähler noch mit Energie versorgt ist. Der Signalverarbeitung im Umdrehungszähler kommt zugute, daß die Amplitude der von einem Wiegand-Sensor gelieferten Spannungsimpulse unabhängig von der Relativgeschwindigkeit des vorbeistreichenden Magneten 2 ist. Auch bei sehr hohen Drehzahlen werden zuverlässig Zählimpulse erzeugt. Außerdem sind derartige kontaktlose Sensoren immun gegen Abnutzung.

Falls ein Magnetfeldsensor 11 Verwendung findet, der in einen definierten Vormagnetisierungszustand versetzt werden muß, bevor er beim Vorbeistreichen des Magneten 2 einen Impuls abgeben kann, wird die auf der Geberwelle 6 sitzende Magnetaufnahme 7 zusätzlich mit einem Setzmagneten bestückt, der z.B. eine gegenüber dem Magneten 2 umgekehrte Polarität aufweist.

**Patentansprüche**

1. Winkellagegeber zur Erfassung der Winkellage eines drehbeweglichen Maschinenelements, insbesondere einer Achse eines Werkzeugmaschinenantriebs, Industrieroboters oder Kraftfahrzeugs, mit einer fotoelektrisch abtastbaren Geberscheibe (1), auf welche die Drehbewegung des Maschinenelements mittels einer mechanisch gekoppelten Geberwelle (6) übertragbar ist, wobei die Geberwelle (6) im Winkellagegeber mit mindestens zwei Wälzlagern (8, 9) gelagert ist, insbesondere mit gegeneinander verspannten Kugellagern, und volle Umdrehungen der Geberwelle (6) mittels mindestens eines mit der Geberwelle (6) umlaufenden Magneten (2) an einen ortsfesten Magnetfeldsensor (11) signalisierbar und in einem Umdrehungszähler mit durch die Bewegungsrichtung festgelegtem Vorzeichen zählbar sind, **gekennzeichnet** durch mindestens einen zwischen den Wälzlagern (8, 9) auf der Geberwelle (6) angeordneten umlaufenden Magneten (2).

2. Winkellagegeber nach Anspruch 1, **dadurch gekennzeichnet,** daß der ortsfeste Magnetfeldsensor (11) ein Wiegand-Sensor oder Impulsdraht ist.

3. Winkellagegeber nach Anspruch 1 oder 2, **dadurch gekennzeichnet,** daß der ortsfeste Magnetfeldsensor (11) in einer axialen Nut (12) oder Bohrung eines die Wälzlager (8, 9) umschließenden Lagergehäuses (10) angeordnet ist.

4. Winkellagegeber nach Anspruch 1, 2 oder 3, **gekennzeichnet** durch eine magnetfelddurchlässige, ortsfeste Spannhülse (3) dünner Wandstärke zwischen den Lageraußenringen (48, 49) der Wälzlager (8, 9), wobei der mit der Geberwelle (6) umlaufende Magnet (2) im Inneren der Spannhülse (3) mit möglichst geringem Abstand von deren Innenwand umläuft.

5. Winkellagegeber nach einem der Ansprüche 1 bis 4, **gekennzeichnet** durch mindestens einen mit der Geberwelle (6) umlaufenden Setzmagneten.

6. Winkellagegeber nach Anspruch 1, **dadurch gekennzeichnet,** daß der ortsfeste Magnetfeldsensor (11) ein Reed-Kontakt ist.

**Revendications**

1. Capteur de position angulaire servant à détecter la position angulaire d'un organe de machine rotatif, notamment d'un axe d'un dispositif d'entraînement d'une machine-outil, d'un robot industriel ou d'un véhicule automobile, comportant un disque (1) pouvant être exploré par voie photoélectrique et auquel le mouvement de rotation de l'organe de machine peut être transmis au moyen d'un arbre (6) du capteur, accouplé mécaniquement, l'arbre (6) étant tourillonné, dans le capteur de position angulaire à l'aide d'au moins deux roulements (8, 9), notamment des roulements à billes bloqués l'un par rapport à l'autre, et des rotations complètes de l'arbre (6) du capteur pouvant être signalées à une sonde magnétique fixe (11) à l'aide d'au moins un aimant (2) tournant avec l'arbre (6) du capteur, pouvant être comptées dans un compteur de nombre de tours, avec un signe fixé par le sens de déplacement, caractérisé par au moins un aimant rotatif (2) monté sur l'arbre (6) du capteur entre les roulements (8, 9).

2. Capteur de position suivant la revendication 1, caractérisé par le fait que la sonde magnétique fixe (11) est un capteur de Wiegand ou un fil de transmission d'impulsions.

3. Capteur de position angulaire suivant la revendication 1 ou 2, caractérisé par le fait que la sonde magnétique fixe (11) est disposée dans une gorge axiale (12) ou dans un perçage axial d'un logement (10) entourant les roulements (8, 9).

4. Capteur de position angulaire suivant la revendication 1, 2 ou 3, caractérisé par une douille fixe de blocage (3), perméable au champ magnétique et possédant une paroi de faible épaisseur et située entre les bagues extérieures (48, 49) des roulements (8, 9), l'aimant (2), qui tourne conjointement avec l'arbre (6) du capteur, tournant à l'intérieur de la douille de blocage (3) en étant séparé par une distance aussi faible que possible de la paroi intérieure de cette douille.

5. Capteur de position angulaire suivant l'une des revendications 1 à 4, caractérisé par au moins un aimant de positionnement tournant conjointement avec l'arbre (6) du capteur.

6. Capteur de position angulaire suivant la revendication 1, caractérisé par le fait que la sonde magnétique fixe (11) est un interrupteur à contacts scellés.

## Claims

1. Angular position encoder for detecting the angular position of a rotatable machine part, more particularly an axle of a machine tool drive, industrial robot or motor vehicle, having an encoder disk (1), capable of being scanned photo-electrically, to which the rotary motion of the machine part can be transmitted by means of a mechanically coupled encoder shaft (6), wherein the encoder shaft (6) is supported in the angular position encoder by at least two roller bearings (8, 9), more particularly by ball bearings braced against one another, and complete revolutions of the encoder shaft (6) can be indicated by means of at least one magnet (2) rotating with the encoder shaft (6) about a stationary magnetic field sensor (11) and can be counted in a revolution counter with sign determined by the movement direction, characterized by at least one rotating magnet (2) arranged between the roller bearings (8, 9) on the encoder shaft (6).

2. Angular position encoder according to claim 1, characterized in that the stationary magnetic field sensor (11) is a Wiegand sensor or pulse wire.

3. Angular position encoder according to claim 1 or 2, characterized in that the stationary magnetic field sensor (11) is arranged in an axial slot (12) or bore-hole of a bearing housing (10) surrounding the roller bearings (8, 9).

4. Angular position encoder according to claim 1, 2 or 3, characterized by a magnetic-field-permeable stationary clamp sleeve (3) of thin wall thickness between the bearing outer rings (48, 49) of the roller bearings (8, 9), whereby the magnet (2) rotating with the encoder shaft (6) rotates within the clamp sleeve (3) with as little distance as possible from its inner wall.

5. Angular position encoder according to one of claims 1 to 4, characterized by at least one setting magnet rotating with the encoder shaft (6).

6. Angular position encoder according to claim 1, characterized in that the stationary magnetic field sensor (11) is a reed contact.